(19) Europäisches Patentamt
European Patent Office
Office européen des brevets

(11) **EP 3 572 893 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **19167754.1**

(22) Anmeldetag: **08.04.2019**

(51) Internationale Patentklassifikation (IPC):
**G05B 23/02** (2006.01)   **G05B 19/418** (2006.01)

(52) Gemeinsame Patentklassifikation (CPC):
**G05B 23/024; G05B 23/0281**

(54) **ANALYSE MEHRERER DIAGNOSEMELDUNGEN EINES TECHNISCHEN SYSTEMS MIT MEHREREN KOMPONENTEN**

ANALYSIS OF MULTIPLE DIAGNOSIS REPORTS OF A TECHNICAL SYSTEM COMPRISING A PLURALITY OF COMPONENTS

ANALYSE D'UNE PLURALITÉ DE MESSAGES DE DIAGNOSTIC D'UN SYSTÈME TECHNIQUE À UNE PLURALITÉ DE COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2018 DE 102018207619**

(43) Veröffentlichungstag der Anmeldung:
**27.11.2019 Patentblatt 2019/48**

(73) Patentinhaber: **Siemens Mobility GmbH 81739 München (DE)**

(72) Erfinder: **Sivalingam, Udhayaraj 81379 München (DE)**

(56) Entgegenhaltungen:
**DE-A1- 19 946 787     DE-A1-102010 044 186**

## Beschreibung

Die Erfindung betrifft ein Verfahren zum Analysieren mehrerer Diagnosemeldungen eines technischen Systems mit mehreren Komponenten, wobei jede Diagnosemeldung einen jeweiligen Zustand des technischen Systems unter Verwendung von mehreren Zustandsbeschreibungen für die Komponenten beschreibt und wobei Diagnosemeldungen desselben Typs jeweils typgleiche Zustandsbeschreibungen umfassen.

Um eine Diagnosemeldung zu analysieren, kann beispielsweise eine Beschreibung der Diagnosemeldung herangezogen werden. Solche Beschreibungen von Diagnosemeldungen sind üblicherweise eher kryptisch, sodass ein Informationsgewinn meist gering ausfällt.

Zur Analyse einer Diagnosemeldung kann weiter eine Dokumentation herangezogen werden. In einigen Fällen ist jedoch eine solche Dokumentation nicht vorhanden. In vielen Fällen ist die vorhandene Dokumentation sehr komplex und hochtechnisch, sodass ein Nachvollziehen der Dokumentation sehr zeitaufwendig ist. Eine Analyse einer Diagnosemeldung unter Verwendung der Dokumentation ist somit ineffizient.

Üblicherweise werden die Diagnosemeldungen unter Verwendung einer Software erzeugt. Zur Analyse mittels der Software erzeugter Diagnosemeldungen kann ein Programmcode der Software nachvollzogen werden. Ein solches Vorgehen ist jedoch sehr zeitaufwendig.

Die Offenlegungsschrift DE 199 46 787 A1 offenbart ein Verfahren zur Diagnose von Maschinen. Dabei wird ein produktfehleranzeigendes Signal von einer Überwachungskamera auf eventuelle Periodizität von fehlerhaften Produkten hin ausgewertet. Wird eine Periodizität ermittelt, kann in Abhängigkeit der ermittelten Periodizität auf eine fehlerhafte Komponente der Maschine geschlossen werden.

Die Druckschrift DE 10 2010 044 186 A1 lehrt ein Verfahren zur Abbildung von feldgerätespezifischen Diagnosemeldungen eines Feldgerätes einer Anlage auf eine Feldgerätetypübergreifende Diagnosemeldung unter Verwendung eines zu diesem Feldgerät zugehörigen Diagnose-Transformationsalgorithmus'.

Eine Aufgabe der Erfindung ist es, ein für jede Art von Diagnosemeldungen nutzbares Verfahren zum Analysieren von Diagnosemeldungen anzugeben, welches insbesondere zeitsparend durchgeführt werden kann.

Die Aufgabe wird gelöst durch ein Verfahren der zuvor genannten Art, bei dem erfindungsgemäß für jede der Diagnosemeldungen jede Zustandsbeschreibung mit einer vorgebbaren Referenz verglichen wird und unter Verwendung des Vergleichs bestimmt wird, ob die jeweilige Komponente einem jeweiligen vorgegebenen Zustand genügt oder nicht.

Weiter wird für Diagnosemeldungen desselben Typs für jede Komponente jeweils eine Häufigkeit ermittelt, welche jeweils angibt, wie häufig die jeweilige Komponente dem jeweiligen vorgegebenen Zustand nicht genügt.

Zweckmäßigerweise gibt die Häufigkeit jeweils an, wie häufig bei den Diagnosemeldungen des jeweiligen Typs die jeweilige Komponente, insbesondere mit der jeweiligen Zustandsbeschreibung, dem jeweiligen vorgegebenen Zustand nicht genügt.

Bei dem erfindungsgemäßen Verfahren wird/werden außerdem die Zustandsbeschreibung(en) derjenigen Komponente(n), deren jeweilige Häufigkeit über einem vorgegebenen Schwellwert liegt, als ursächlich für die Diagnosemeldungen des jeweiligen Typs eingestuft.

Insbesondere falls für Diagnosemeldungen eines jeweiligen Typs für eine oder mehrere der Komponente(n) die jeweilige Häufigkeit über einem vorgegebenen Schwellwert liegt, wird vorzugsweise die jeweilige Zustandsbeschreibung dieser einen oder mehreren Komponente(n) als ursächlich für die Diagnosemeldungen dieses Typs eingestuft.

Auf diese Weise kann eine Ursache bzw. ein Auslöser der Diagnosemeldungen eines jeweiligen Typs angenommen und/oder erkannt werden.

Vorzugsweise sind Diagnosemeldungen eines Typs jeweils Diagnosemeldungen, welche einen gleichartigen Zustand des technischen Systems beschreiben.

Erfindungsgemäß umfasst jede Diagnosemeldung mehrere Zustandsbeschreibungen, wobei jede der Zustandsbeschreibungen vorzugsweise eine Zustandsbeschreibung für eine der Komponenten ist. Insbesondere kann jede der Zustandsbeschreibungen jeweils eine Zustandsbeschreibung für genau eine der Komponenten sein.

Zweckmäßigerweise ist eine Komponente des technischen Systems eine technische Komponente. Eine Komponente kann eine Subkomponente sein.

Das technische System kann ein stationäres technisches System sein, beispielsweise eine technische Anlage. Weiter kann das technische System ein mobiles technisches System sein. Beispielsweise kann das technische System ein Fahrzeug, insbesondere ein Schienenfahrzeug sein.

Das erfindungsgemäße Verfahren ist vorzugsweise für jede Art von Diagnosemeldungen nutzbar. Insbesondere ist das Verfahren unabhängig von einer Verfügbarkeit von Beschreibungen der Diagnosemeldungen und/oder einer Dokumentation. Weiter ist das Verfahren zeitsparend, insbesondere gegenüber dem Nachvollziehen einer Dokumentation und/oder gegenüber dem Nachvollziehen eines Programmcodes einer Software zur Erzeugung der Diagnosemeldungen.

Der Schwellwert, mit dem die Häufigkeit zweckmäßigerweise verglichen wird, kann ein fest vorgegebener Schwellwert sein. Beispielsweise kann der Schwellwert ein fest vorgegebener Prozentanteil sein.

Weiter kann der Schwellwert ein relativ vorgegebener Schwellwert sein. Beispielsweise kann der Schwellwert abhängig von einer maximal ermittelten Häufigkeit sein.

Für alle Zustandsbeschreibungen kann ein gleicher Schwellwert vorgegeben sein. Weiter kann für verschiedene Zustandsbeschreibungen auch ein jeweils an die Zustandsbeschreibung angepasster Schwellwert vorgegeben sein.

Die Zustandsbeschreibungen können numerische Werte, alphabetische Werte und/oder alphanumerische Werte umfassen.

In einer bevorzugten Ausgestaltung der Erfindung weist jede der Zustandsbeschreibungen jeweils zumindest einen numerischen Parameterwert zumindest eines Zustandsparameters der jeweiligen Komponente auf.

Zweckmäßigerweise wird der jeweilige numerische Parameterwert eines Zustandsparameters jeweils mittels eines Sensors ermittelt, insbesondere gemessen.

Weiter ist es vorteilhaft, wenn die jeweilige Referenz jeweils zumindest einen numerischen Referenzwert umfasst. Der jeweilige numerische Referenzwert kann beispielsweise unter Verwendung einer jeweiligen Häufigkeitsverteilung einer Vielzahl von jeweiligen Parameterwerten des jeweiligen Zustandsparameters ermittelt werden.

Die Häufigkeitsverteilung kann beispielsweise eine Normalverteilung sein. Prinzipiell kann die Häufigkeitsverteilung eine beliebige Häufigkeitsverteilung sein.

Die jeweilige Häufigkeitsverteilung einer Vielzahl von jeweiligen Parameterwerten des jeweiligen Zustandsparameters kann beispielsweise unter Verwendung zumindest einer Zeitreihe ermittelt werden, wobei die Zeitreihe die Vielzahl von jeweiligen Parameterwerten des jeweiligen Zustandsparameters umfasst. Insbesondere kann die jeweilige Zeitreihe jeweils eine zeitliche Entwicklung des jeweiligen Zustandsparameters beschreiben.

Der jeweilige Referenzwert kann ein Quantil mit einem vorgegebenen Unterschreitungsanteil der jeweiligen Häufigkeitsverteilung sein. Beispielsweise kann der vorgegebene Unterschreitungsanteil mindestens 90%, insbesondere mindestens 95%, betragen. Insbesondere kann das Quantil ein 95%-Quantil, auch 95%-Perzentil oder $Q_{0,95}$ genannt, sein.

Der Referenzwert kann einmalig ermittelt werden. Auf diese Weise kann der Referenzwert unveränderlich sein. Insbesondere kann die Häufigkeitsverteilung einmalig ermittelt werden.

In einer vorteilhaften Weiterbildung der Erfindung wird die Referenz, insbesondere der Referenzwert, regelmäßig aktualisiert. Insbesondere kann die Häufigkeitsverteilung regelmäßig aktualisiert werden. Beispielsweise kann die Zeitreihe, welche die Vielzahl von jeweiligen Parameterwerten des jeweiligen Zustandsparameters umfasst, regelmäßig aktualisiert werden.

Zumindest ein Teil der Zustandsbeschreibungen kann jeweils mehrere numerische Parameterwerte für mehrere Zustandsparameter der jeweiligen Komponente aufweisen.

Für Diagnosemeldungen desselben Typs kann für jede Komponente jeweils eine Häufigkeit ermittelt werden, welche jeweils angibt, wie häufig ein jeweiliger Zustandsparameter der jeweiligen Komponente dem jeweiligen vorgegebenen Zustand nicht genügt. Ferner kann/können der/die Zustandsparameter derjenigen Komponente(n), dessen/deren jeweilige Häufigkeit über einem vorgegebenen Schwellwert liegt, als ursächlich für die Diagnosemeldungen des jeweiligen Typs eingestuft werden.

Ferner ist die Erfindung gerichtet auf ein Computerprogramm mit Befehlen, welche, wenn das Computerprogramm auf einem Computer ausgeführt wird, diesen veranlasst, das zuvor genannte Verfahren und/oder eine seiner Weiterbildungen auszuführen.

Außerdem ist die Erfindung gerichtet auf ein computerlesbares Speichermedium mit Befehlen, welche, wenn sie durch einen Computer ausgeführt werden, diesen Computer veranlassen, das zuvor genannte Verfahren und/oder eine seiner Weiterbildungen auszuführen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, dem erfindungsgemäßen Computerprogramm und dem erfindungsgemäßen computerlesbaren Speichermedium kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

FIG 1 ein Flussdiagramm, welches ein Verfahren zum Analysieren mehrerer Diagnosemeldungen eines technischen Systems mit mehreren Komponenten verdeutlicht,

FIG 2 ein Diagramm zur Ermittlung einer Referenz, und

FIG 3 ein Diagramm, in welchem diejenigen Zustandsbeschreibungen markiert sind, welche einem jeweils vorgegebenen Zustand nicht genügen.

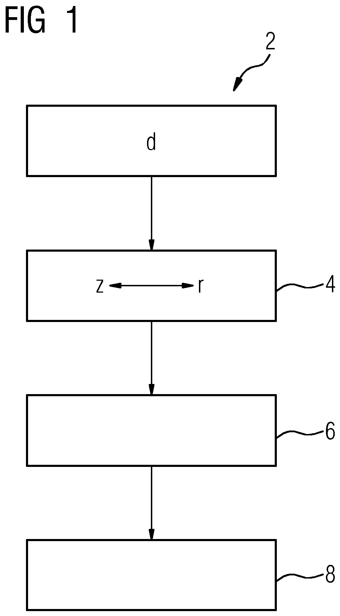

FIG 1 zeigt ein Flussdiagramm 2, welches ein Verfahren zum Analysieren mehrerer Diagnosemeldungen d eines technischen Systems mit mehreren Komponenten verdeutlicht.

Jede Diagnosemeldung d beschreibt einen jeweiligen Zustand des technischen Systems unter Verwendung von mehreren Zustandsbeschreibungen z für die Komponenten. Außerdem umfassen Diagnosemeldungen d desselben Typs jeweils typgleiche Zustandsbeschreibungen z.

Beispielsweise können Diagnosemeldungen d desselben Typs, hier beispielsweise des Typs a, wie folgt lauten:

$$d_{a,1} = (z_1, \quad z_2, \quad … \quad z_n)$$
$$d_{a,2} = (z_1, \quad z_2, \quad … \quad z_n)$$
$$…$$
$$d_{a,m} = (z_1, \quad z_2, \quad … \quad z_n)$$

D. h., jede der Diagnosemeldungen $d_a$ (des Typs a) umfasst eine Zustandsbeschreibung $z_1$ eines ersten Typs, eine Zustandsbeschreibung $z_2$ eines zweiten Typs usw. Dabei ist die Zustandsbeschreibung $z_1$ eine Zustandsbeschreibung z für eine erste Komponente des technischen Systems, die Zustandsbeschreibung $z_2$ eine Zustandsbeschreibung z für eine zweite Komponente des technischen Systems usw.

Für jede der Diagnosemeldungen d wird jede Zustandsbeschreibung z mit einer jeweils vorgebbaren Referenz r verglichen (Vergleich 10). Beispielsweise wird jede Zustandsbeschreibung $z_1$ mit einer Referenz $r_1$ verglichen, jede Zustandsbeschreibung $z_2$ mit einer Referenz $r_2$ usw.

Unter Verwendung des Vergleichs 10 wird bestimmt, ob die jeweilige Komponente - insbesondere mit seiner jeweiligen Zustandsbeschreibung z - einem jeweiligen vorgegebenen Zustand genügt oder nicht.

Beispielsweise stehen im Folgenden fett gedruckte Zustandsbeschreibungen **z** für Zustandsbeschreibungen z von Komponenten, welche einem jeweiligen vorgegebenen Zustand nicht genügen. Weiter stehen z. B. kursiv gedruckte Zustandsbeschreibungen z für Zustandsbeschreibungen z von Komponenten, welche einem jeweiligen vorgegebenen Zustand genügen. Die zuvor genannten Diagnosemeldungen d des Typs a können dann beispielsweise wie folgt lauten:

$$d_a 1 = (z1, \quad z2, \quad … \quad \mathbf{zn})$$
$$d_a 2 = (z1, \quad \mathbf{z2,} \quad … \quad zn)$$
$$…$$
$$d_a m = (z1, \quad z2, \quad … \quad \mathbf{zn})$$

Für Diagnosemeldungen d desselben Typs wird für jede Komponente jeweils eine Häufigkeit 6 ermittelt, welche jeweils angibt, wie häufig die jeweilige Komponente dem jeweiligen vorgegebenen Zustand nicht genügt.

Anschaulich gesprochen kann beispielsweise für jede Zustandsbeschreibung z eines Typs - für alle Diagnosemeldungen d eines Typs, hier des Typs a - die Häufigkeit 6 der in diesem Beispiel fett gedruckten Zustandsbeschreibungen z ermittelt werden.

Weiter können beispielsweise für jede Zustandsbeschreibung z einer jeweiligen Komponente, welche einem jeweiligen vorgegebenen Zustand nicht genügt, jeweils der Wert "1" vergeben werden. Für jede Zustandsbeschreibung z einer jeweiligen Komponente, welche einem jeweiligen vorgegebenen Zustand genügt, kann der Wert "0" vergehen werden. Die zuvor genannten Diagnosemeldungen d des Typs a können dann beispielsweise wie folgt lauten:

$$d_a 1 = (0, \quad 0, \quad … \quad 1)$$
$$d_a 2 = (0, \quad 1, \quad … \quad 0)$$
$$…$$
$$d_a m = (0, \quad 0, \quad … \quad 1)$$

Für jede Zustandsbeschreibung z eines Typs - für alle Diagnosemeldungen d eines Typs, hier des Typs a - kann dann die Häufigkeit 6 ermittelt werden, welche anschaulich angibt, wie oft für die jeweilige Zustandsbeschreibung $z_n$ der Wert "1" vergeben wurde.

Die Zustandsbeschreibung(en) z derjenigen Komponente(n), deren jeweilige Häufigkeit 6 über einem vorgegebenen Schwellwert liegt, wird/werden als ursächlich für die Diagnosemeldungen d des jeweiligen Typs eingestuft (Einstufung 8).

Prinzipiell kann die Referenz r vorgegeben sein. Weiter kann die Referenz r ermittelt werden.

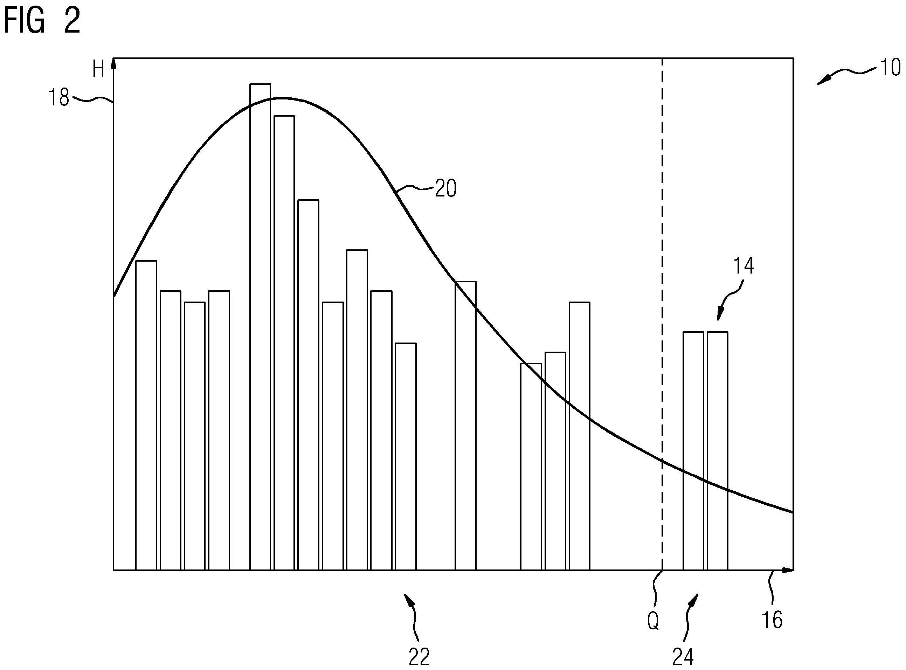

FIG 2 zeigt bespielhaft ein Diagramm 10 zur Ermittlung der Referenz r aus FIG 1.

In dieser Weiterbildung der Erfindung weist jede der Zustandsbeschreibungen z jeweils zumindest einen numerischen Parameterwert p zumindest eines Zustandsparameters z der jeweiligen Komponente auf. Beispielsweise kann die jeweilige Zustandsbeschreibung $z_n$ in Form eines Vektors vorliegen, der mehrere Parameterwerte $p_n$ jeweils eines Zustandsparameters umfasst.

$$z_n = (p_{n,1}, p_{n,2} \ldots)$$

Außerdem umfasst die jeweilige Referenz r, mit der die jeweilige Zustandsbeschreibung z verglichen wird (10), jeweils zumindest einen numerischen Referenzwert. Falls die Zustandsbeschreibung z in Form eines Vektors vorliegt, so liegt vorzugsweise auch die jeweilige Referenz r in Form eines Vektors mit derselben Dimension vor.

Bei dem Vergleich 10 wird jede der Zustandsbeschreibungen z mit einer jeweiligen Referenz r verglichen. Insbesondere kann bei dem Vergleich der jeweilige Parameterwert p (der Zustandsbeschreibungen z) mit dem jeweiligen Referenzwert verglichen werden.

Jeder Parameterwert p der Zustandsbeschreibungen z kann unter Verwendung eines Sensors ermittelt worden sein.

Der jeweilige Referenzwert wird unter Verwendung einer Vielzahl von jeweiligen Parameterwerten ermittelt. Die Vielzahl von jeweiligen Parameterwerten liegt beispielsweise jeweils als Zeitreihe vor. Die Zeitreihe kann insbesondere unabhängig von den Diagnosemeldungen d ermittelt worden sein. Beispielsweise hat jeder Sensor eine Zeitreihe mit einer Vielzahl von Parameterwerten ermittelt, insbesondere unabhängig von einer Generierung von Diagnosemeldungen.

Die empirischen Häufigkeiten H der in der jeweiligen Zeitreihe vorliegenden jeweiligen Parameterwerte p werden ermittelt. Die empirischen Häufigkeiten H der Vielzahl von jeweiligen Parameterwerten kann als Histogramm 14 dargestellt werden.

In FIG 2 sind beispielhaft die empirischen Häufigkeiten H mehrerer Parameterwerte einer Zeitreihe als Histogramm 14 in dem Diagramm 10 dargestellt. Auf der x-Achse 16 des Diagramms 10 sind die Parameterwerte aufgetragen. Weiter ist auf der y-Achse 18 des Diagramms 10 die jeweilige Häufigkeit H aufgetragen.

Beispielsweise wird eine Verteilungsfunktion eines vorgegebenen Verteilungstyps als parametrisierte Verteilungsfunktion vorgegeben. Die Verteilungsfunktion kann eine Verteilungsdichtefunktion oder eine kumulative Verteilungsfunktion sein. In diesem Beispiel wird beispielsweise eine Verteilungsdichtefunktion vorgegeben. Beispielsweise kann der vorgegebene Verteilungstyp eine Normalverteilung, insbesondere eine logarithmische Normalverteilung, sein. Die Parameter der parametrisierten Verteilungsfunktion werden (unter Verwendung bekannter Methoden) gefittet, sodass eine Häufigkeitsverteilung 20 mit einer angepassten Verteilungsfunktion ermittelt wird. Die Häufigkeitsverteilung 20 mit der angepassten Verteilungsfunktion ist in dem Diagramm in FIG 2 als durchgezogene Linie dargestellt.

Der jeweilige Referenzwert Q ist z. B. ein Quantil Q der jeweiligen Häufigkeitsverteilung 20 mit einem vorgegebenen Unterschreitungsanteil, beispielsweise das 95%-Quantil $Q_{0,95}$.

Für jeden Zustandsparameter wird ein jeweilige Referenzwert Q jeweils unter Verwendung der jeweiligen Häufigkeitsverteilung 20 einer Vielzahl von jeweiligen Parameterwerten p auf analoge Weise ermittelt.

Zur Prüfung, ob die jeweilige Komponente einem jeweiligen vorgegebenen Zustand genügt oder nicht, wird jeder Parameterwert des jeweiligen Zustandsparameters mit einem jeweiligen Referenzwert Q verglichen. Dieser Vergleich wird im Folgenden beispielhaft für einen Parameterwert eines Zustandsparameters erläutert:

Der Referenzwert Q teilt das Diagramm in einen ersten Bereich 22, welcher links des Referenzwerts Q liegt, und einen zweiten Bereich 24, welcher rechts des Referenzwerts Q liegt.

Parameterwerte p, welche kleiner als der jeweilige Referenzwert Q sind - und somit in dem ersten Bereich 22 liegen -, werden als "normal" betrachtet. Eine Komponente, deren Parameterwert p kleiner als der jeweilige Referenzwert Q ist, genügt in diesem Beispiel einem vorgegebenen Zustand.

Hingegen werden Parameterwerte p, welche größer als der jeweilige Referenzwert Q sind - und somit in dem zweiten Bereich 24 liegen -, als "anormal" bzw. "unnormal" betrachtet. Eine Komponente, deren Parameterwert p größer als der jeweilige Referenzwert Q ist, genügt in diesem Beispiel dem vorgegebenen Zustand nicht.

Umfasst die Zustandsbeschreibung z mehrere Parameterwerte p mehrerer Zustandsparameter, so genügt die Komponente mit dieser Zustandsbeschreibung z dem vorgegebenen Zustand nicht, wenn bereits ein Parameterwert p der Zustandsbeschreibung z größer als der jeweilige Referenzwert Q ist.

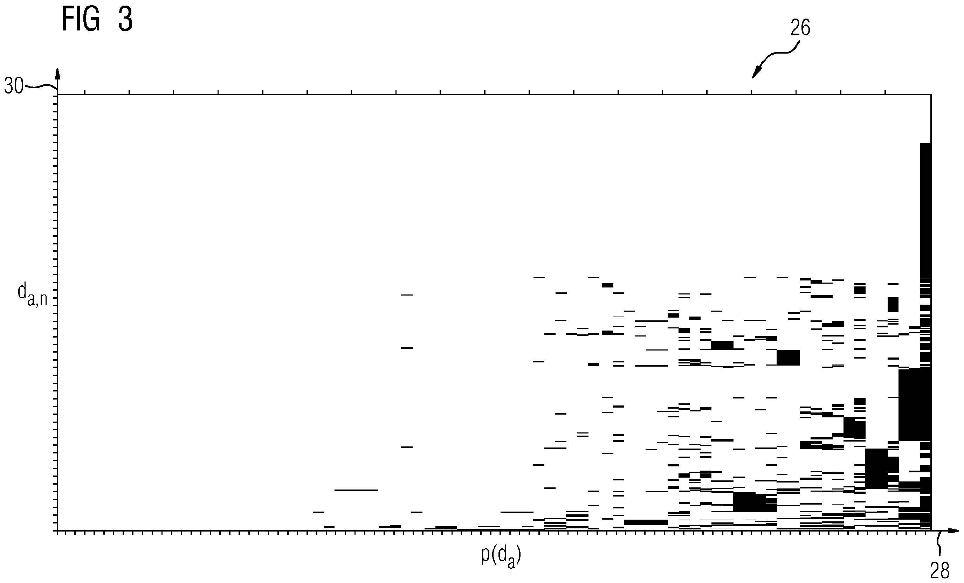

FIG 3 zeigt ein Diagramm 26. Auf der y-Achse 30 sind die Diagnosemeldungen $d_a$ aufgetragen. Auf der x-Achse 28 sind die Parameterwerte p der Zustandsparameter (für die Diagnosemeldungen $d_a$) aufgetragen.

Mit schwarz sind diejenigen Parameterwerte p markiert, welche größer als der jeweilige Referenzwert Q ist. Diese schwarz markierten Parameterwerte p zeigen also anormales Verhalten.

Für Diagnosemeldungen desselben Typs werden für jede Komponente jeweils eine Häufigkeit 6 ermittelt wird, welche jeweils angibt, wie häufig ein jeweiliger Zustandsparameter der jeweiligen Komponente dem jeweiligen vorgegebenen Zustand nicht genügt. Das heißt, die Häufigkeit 6 gibt jeweils an, wie viele Parameter eines Zustandsparameters jeweils größer als der jeweilige Referenzwert Q sind.

Der/Die Zustandsparameter derjenigen Komponente(n), dessen/deren jeweilige Häufigkeit 6 über einem vorgegebenen Schwellwert liegt, wird/werden als ursächlich für die Diagnosemeldungen d des jeweiligen Typs - hier des Typs a - eingestuft.

Der Schwellwert kann beispielsweise bei 70% liegen.

Über 70% der in der letzten Spalte des Diagramms 26 aufgetragenen Parameterwerte p verhalten sich anormal/unnormal, d. h. sie genügen nicht einem vorgegebenen Zustand. D. h. der Zustandsparameters mit den in der letzten Spalte des Diagramms 26 aufgetragenen Parameterwerten p wird also als ursächlich für die Diagnosemeldungen des jeweiligen Typs eingestuft.

Das heißt wiederum, dass die Komponente mit derjenigen Zustandsbeschreibung z als ursächlich für die Diagnosemeldung $d_a$ eingestuft wird, welche den Zustandsparameter mit den in der letzten Spalte des Diagramms 26 aufgetragenen Parameterwerten p umfasst.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Analysieren mehrerer Diagnosemeldungen (d) eines technischen Systems mit mehreren Komponenten,

   wobei jede Diagnosemeldung (d) einen jeweiligen Zustand des technischen Systems unter Verwendung von mehreren Zustandsbeschreibungen (z) für die Komponenten beschreibt, wobei jede der Zustandsbeschreibungen (z) eine Zustandsbeschreibung für eine der Komponenten ist, und
   wobei Diagnosemeldungen (d) desselben Typs (a) jeweils typgleiche Zustandsbeschreibungen (z) umfassen, wobei die Zustandsbeschreibung $(z_1, z_2, ..., z_n)$ eines n-ten Typs eine Zustandsbeschreibung (z) für eine n-te Komponente des technischen Systems ist,
   bei dem

   - für jede der Diagnosemeldungen (d) jede Zustandsbeschreibung (z) mit einer vorgebbaren Referenz (r) verglichen wird (4) und
   unter Verwendung des Vergleichs (4) bestimmt wird, ob die jeweilige Komponente einem jeweiligen vorgegebenen Zustand genügt oder nicht,
   - für Diagnosemeldungen (d) desselben Typs (a) für jede Komponente jeweils eine Häufigkeit (6) ermittelt wird, welche jeweils angibt, wie häufig die jeweilige Komponente dem jeweiligen vorgegebenen Zustand nicht genügt, und

   - die Zustandsbeschreibung(en) (z) derjenigen Komponente(n), deren jeweilige Häufigkeit (6) über einem vorgegebenen Schwellwert liegt, als ursächlich für die Diagnosemeldungen (d) des jeweiligen Typs (a) eingestuft wird/werden.

2. Verfahren nach Anspruch 1,
   **dadurch gekennzeichnet, dass**
   jede der Zustandsbeschreibungen (z) jeweils zumindest einen numerischen Parameterwert (p) zumindest eines Zustandsparameters der jeweiligen Komponente aufweist.

3. Verfahren nach Anspruch 2,
   **dadurch gekennzeichnet, dass**
   die jeweilige Referenz (r) jeweils zumindest einen numerischen Referenzwert (Q) umfasst, welcher jeweils unter Verwendung einer jeweiligen Häufigkeitsverteilung (20) einer Vielzahl von jeweiligen Parameterwerten des jeweiligen Zustandsparameters ermittelt wird.

4. Verfahren nach Anspruch 3,
   **dadurch gekennzeichnet, dass**
   der jeweilige Referenzwert (Q) ein Quantil (Q) mit einem vorgegebenen Unterschreitungsanteil der jeweiligen Häufigkeitsverteilung (20) ist.

5. Verfahren nach einem der vorhergehenden Ansprüche, **dadurch gekennzeichnet, dass**
   die Referenz regelmäßig aktualisiert wird.

6. Verfahren nach einem der vorhergehenden Ansprüche, **dadurch gekennzeichnet, dass**

   - zumindest ein Teil der Zustandsbeschreibungen (z) jeweils mehrere numerische Parameterwerte (p) für mehrere Zustandsparameter der jeweiligen Komponente aufweist,
   - für Diagnosemeldungen (d) desselben Typs (a) für jede Komponente jeweils eine Häufigkeit (6) ermittelt wird, welche jeweils angibt, wie häufig ein jeweiliger Zustandsparameter der jeweiligen Komponente dem jeweiligen vorgegebenen Zustand nicht genügt und
   - der/die Zustandsparameter derjenigen Komponente(n), dessen/deren jeweilige Häufigkeit (6) über einem vorgegebenen Schwellwert liegt, als ursächlich für die Diagnosemeldungen (d) des jeweiligen Typs (a) eingestuft wird/werden.

7. Computerprogramm mit Befehlen, welche, wenn das Computerprogramm auf einem Computer ausgeführt wird, diesen veranlasst, das Verfahren nach einem der Ansprüche 1 bis 6 auszuführen.

8. Computerlesbares Speichermedium mit Befehlen, welche, wenn sie durch einen Computer ausgeführt werden, diesen Computer veranlassen, das Verfahren nach einem der Ansprüche 1 bis 6 auszuführen.

## Claims

1. Method for analysing a plurality of diagnostic reports (d) of a technical system comprising a plurality of components, each diagnostic report (d) describing a respective state of the technical system using a plurality of state descriptors (z) for the components, each of the state descriptors (z) being a state descriptor for one of the components, and

   diagnostic reports (d) of the same type (a) each comprising type-identical state descriptors (z), the state descriptor $(z_1, z_2, ..., z_n)$ of an n-th type being a state descriptor (z) for an n-th component of the technical system, wherein

   - for each of the diagnostic reports (d), each state descriptor (z) is compared (4) to a specifiable reference (r) and whether or not the respective component satisfies a respective specified state is determined using the comparison (4),
   - for diagnostic reports (d) of the same type (a), a frequency (6) is determined in each case for each component, the frequency in each case specifying how frequently the respective component has not satisfied the respective specified state, and
   - the state descriptor(s) (z) of those component(s) whose respective frequency (6) is above a specified threshold is/are classified as being the cause of the diagnostic reports (d) of the respective type (a).

2. Method according to Claim 1, **characterized in that** each of the state descriptors (z) respectively has at least one numerical parameter value (p) of at least one state parameter of the respective component.

3. Method according to Claim 2, **characterized in that** the respective reference (r) in each case comprises at least one numerical reference value (Q) which is determined in each case using a respective frequency distribution (20) of a multiplicity of respective parameter values of the respective state parameter.

4. Method according to Claim 3, **characterized in that** the respective reference value (Q) is a quantile (Q) with a specified probability of non-exceedance of the respective frequency distribution (20).

5. Method according to any one of the preceding claims, **characterized in that** the reference is regularly updated.

6. Method according to any one of the preceding claims, **characterized in that**

   - at least some of the state descriptors (z) each have a plurality of numerical parameter values (p) for a plurality of state parameters of the respective component,
   - for diagnostic reports (d) of the same type (a), a frequency (6) is determined in each case for each component, the frequency in each case specifying how frequently a respective state parameter of the respective component has not satisfied the respective specified state, and
   - the state parameter(s) of those component(s) whose respective frequency (6) is above a specified threshold is/are classified as being the cause of the diagnostic reports (d) of the respective type (a).

7. Computer program comprising commands which, when the computer program is executed on a computer, cause the latter to carry out the method according to any one of Claims 1 to 6.

8. Computer-readable storage medium comprising commands which, when executed by a computer, cause said computer to carry out the method according to any one of Claims 1 to 6.

## Revendications

1. Procédé d'analyse de plusieurs messages (d) de diagnostic d'un système technique ayant plusieurs composants,

   dans lequel chaque message (d) de diagnostic décrit un état respectif du système technique en utilisant plusieurs descriptions (z) d'état des composants, dans lequel chacune des descriptions (z) d'état est une description d'état de l'un des composants, et dans lequel des messages (d) de diagnostic du même type (a) comprennent chacun des descriptions (z) d'état de même type, dans lequel la description $(z_1, z_2,..., z_n)$ d'état d'un nième type est une description (z) d'état d'un nième composant du système technique, dans lequel,

   - pour chacun des messages (d) de diagnostic, l'on compare (4) chaque description (z) d'état à une référence (r) pouvant être donnée à l'avance et

en utilisant la comparaison (4), on détermine si le composant respectif satisfait ou non un état respectif donné à l'avance,

- pour des messages (d) de diagnostic du même type (a), on détermine pour chaque composant respectivement une fréquence (6), qui indique respectivement la fréquence avec laquelle le composant respectif ne satisfait pas à l'état respectif donné à l'avance, et

- on classe la (les) description(s) (z) d'état du (des) composant(s) dont la fréquence (6) respective est au-dessus d'une valeur de seuil donnée à l'avance, comme causale des messages (d) de diagnostic du type (a) respectif.

**2.** Procédé suivant la revendication 1, **caractérisé en ce que**
chacune des descriptions (z) d'état a respectivement au moins une valeur (p) de paramètre numérique d'au moins un paramètre d'état du composant respectif.

**3.** Procédé suivant la revendication 2, **caractérisé en ce que**
la référence (r) respective comprend respectivement au moins une valeur (Q) de référence numérique, que l'on détermine respectivement en utilisant une répartition (20) respective de fréquence d'une pluralité de valeurs de paramètre respectives du paramètre d'état respectif.

**4.** Procédé suivant la revendication 3, **caractérisé en ce que**
la valeur (Q) respective de référence est un quantile (Q) ayant une proportion donnée à l'avance de dépassement en baisse de la répartition (20) de fréquence respective.

**5.** Procédé suivant l'une des revendications précédentes, **caractérisé en ce que**
l'on met à jour régulièrement la référence.

**6.** Procédé suivant l'une des revendications précédentes, **caractérisé en ce que**

- au moins une partie des descriptions (z) d'état a respectivement plusieurs valeurs (p) numériques de plusieurs paramètres d'état du composant respectif,

- pour des messages (d) de diagnostic du même type (a), on détermine pour chaque composant respectivement une fréquence (6), qui indique respectivement la fréquence avec laquelle un paramètre d'état respectif du composant respectif ne satisfait pas l'état respectif donné à l'avance et

- on classe le/les paramètre(s) d'état (d) des composants respectif(s), dont la /les fréquences (6) respectives dépassent une valeur de seuil donnée à l'avance, comme causale du message (d) de diagnostic du type (a) respectif.

**7.** Programme d'ordinateur ayant des instructions qui, lorsque le programme d'ordinateur est réalisé sur un ordinateur, font qu'elles effectuent le procédé suivant l'une des revendications 1 à 6.

**8.** Support de mémoire déchiffrable par ordinateur, ayant des instructions qui, lorsqu'elles sont réalisées par un ordinateur, font qu'elles effectuent le procédé suivant l'une des revendications 1 à 6.

FIG 1

FIG 2

EP 3 572 893 B1

EP 3 572 893 B1

FIG 3

**IN DER BESCHREIBUNG AUFGEFÜHRTE DOKUMENTE**

**In der Beschreibung aufgeführte Patentdokumente**

- DE 19946787 A1
- DE 102010044186 A1